# EUROPÄISCHE PATENTSCHRIFT

(11) **EP 0 748 728 B1**
(45) Veröffentlichungstag und Bekanntmachung des Hinweises auf die Patenterteilung: **22.03.2000**
(21) Anmeldenummer: 96106400.3
(22) Anmeldetag: 24.04.1996
(51) Int. Cl.: B60S 1/08

(54) **Verfahren zur Steuerung des Wischintervalls von Scheibenwischern in Kraftfahrzeugen**
Method of controlling the wipe interval of motor vehicle windscreen wipers
Méthode de commande de l'intervalle d'essuyage d'essuie-glaces de véhicules automobiles

(30) Priorität: 12.06.1995 DE 19521318
(43) Veröffentlichungstag der Anmeldung: 18.12.1996
(73) Patentinhaber: Volkswagen Aktiengesellschaft, 38436 Wolfsburg (DE)
(72) Erfinder: v. Biedersee, Heidereich, Dr., 38468 Ehra-Lessien (DE); Rennert, Ingo, 38539 Müden/Aller (DE); Peters, Dietmar, 38118 Braunschweig (DE); Wieland, Jens, 38126 Braunschweig (DE)

(56) Entgegenhaltungen:
- EP-A- 0 283 005
- DE-A- 4 136 724
- DE-C- 4 205 268

## Beschreibung

Die Erfindung betrifft ein Verfahren zur Steuerung des Wischintervalls von Scheibenwischern in Kraftfahrzeugen durch Einstellen der Pausenzeit zwischen zwei aufeinanderfolgenden Wischbewegungen mit Hilfe eines Wählschalters der mindestens die Schaltstellungen "Wischbetrieb AUS" und "Intervallbetrieb EIN" aufweist, und einer Steuerschaltung, in dem der Wählschalter sowohl zum Verlängern als auch zum Verkürzen der eingestellten Pausenzeit in die Schaltstellung "Wischbetrieb AUS" und nach der gewünschten Pausenzeit in die Schaltstellung "Intervallbetrieb EIN" überführt wird, wobei mit der zweiten Schalterbetätigung eine Wischbewegung willkürlich ausgelöst wird.

Aus der Literatur sind eine ganze Reihe von Verfahren zur Einstellung bzw. Programmierung der Pausenzeit des Wischintervalls bekannt. So wird in der Zeitschrift Elektor 4/80 Seite 34 bis 39 ein Verfahren zum Einstellen der Wischintervallzeit eines Scheibenwischers beschrieben, bei dem ein Schalter zur Einstellung der Wischintervallzeit betätigt wird. Mit dem nächsten Umschalten des Schalters und dem darauffolgenden Wischen ist dann das neue Wischintervall festgelegt. Problematisch ist bei diesem Verfahren die Notwendigkeit anzusehen, daß die erste Betätigung des Schalters direkt nach Beendigung eines Wischvorganges erfolgen muß, wodurch die Programmierung der Intervallzeit erschwert wird, da sich die Bedienperson durch Beobachten der Scheibe entweder an einer verschmutzten Scheibe oder dem Stottern der Wischerblätter durch Trockenreibung auf der Scheibe orientiert.

Es ist bekannt aus DE 41 36 724 A1, daß zur Anspassung des Wischintervalls von Scheibenwischern im Fahrzeug neben der Schalterstellung "Wischbetrieb EIN" und "Intervallbetrieb EIN" weiterhin eine Schalterstellung "Pausenzeit" zur Verfügung steht die federnd in die Schalterstellung Intervallbetrieb EIN zurückkehrt und zum einstellen der Pausenzeit verwandt wird.

Des weiteren ist aus der deutschen Patentschrift DE 35 29 004 C1 ein Verfahren zur Beeinflussung der Intervallwischfunktion von Scheibenwischeinrichtungen bekannt, bei dem der Benutzer des Kraftfahrzeuges mit demselben Betätigungsorgan, mit welchem die Standardwischfunktionen ausgelöst werden, auch die Intervallpausenzeit variieren kann, wobei zur Programmierung der Intervallpausenzeit mindestens drei Schaltstellungen des Betätigungsorgans benötigt werden, nämlich eine Aus-Stellung, eine Intervall-Wischfunktionsstellung und eine Dauer-Wischfunktionsstellung. Wird das Betätigungsorgan vom Benutzer von seiner Aus-Stellung in die Intervall-Wischfunktionsstellung gebracht, erfolgt das Intervallwischen mit einer vorgegebenen Intervallpausenzeit. Soll diese Pausenzeit entsprechend den Witterungsverhältnissen verkürzt werden, so wird das Betätigungsorgan von der Intervall-Wischfunktionsstellung in die benachbarte Dauer-Wischfunktionsstellung gebracht. Wird dann das Betätigungsorgan vor Beendigung des gerade ablaufenden ersten Wischzyklusses wieder in die Intervallfunktionsstellung überführt, so wird der sich ergebene Differenzwert zwischen dem Anfang der Intervallpausenzeit und dem Zeitpunkt der Umschaltung des Betätigungsorgans als neue Intervallpausenzeit für alle weiteren Intervall-Wischzyklen gültig. Erfolgt vor der Zurückschaltung des Betätigungsorgans in die Intervall-Wischfunktionsstellung mehr als ein Wischzyklus, bleibt die ursprüngliche Intervallpausenzeit unverändert. Zum Verlängern der Intervallpausenzeit muß der Benutzer das Betätigungsorgan von der Intervall-Wischfunktionsstellung in die Aus-Stellung und nach Ablauf der gewünschten Pausenzeit wieder in die Intervall-Wischfunktionsstellung bringen. Die so eingestellten Intervallpausenzeit ist als neue Pausenzeit für weitere Intervall-Wischzyklen gültig. Dieses Verfahren hat den Nachteil, daß zum Verkürzen und zum Verlängern der Intervallpausenzeit unterschiedliche Operationen vom Fahrer durchgeführt werden müssen.

Zur Beseitigung dieses Nachteils schlägt die Gattungsgemäße europäische Patentschrift EP 283 005 ein Verfahren zur Steuerung des Wischintervalls von Scheibenwischern vor, bei dem die Einstellung der Pausenzeit zwischen zwei Wischvorgängen mit Hilfe eines ohnehin vorhandenen Wählschalters erfolgt, der wenigstens die Schaltstellungen "Wischbetrieb AUS" und "Intervallbetrieb EIN" aufweist. Sowohl zum Verlängern als auch zum Verkürzen der Pausenzeit zwischen zwei aufeinanderfolgenden Wischbewegungen, die vom Beginn einer ersten Wischbewegung bis zum Beginn der zweiten Wischbewegung bzw. vom Ende der ersten Wischbewegung bis zum Ende der zweiten Wischbewegung definiert ist, wird der Wählschalter von der Schaltstellung "Intervallbetrieb EIN" in die Schaltstellung "Wischbetrieb AUS" gebracht. Gleichzeitig wird mit der Schalterbetätigung eine Wischbewegung willkürlich ausgelöst. Nach dem Ablauf der gewünschten Pausenzeit wird der Wählschalter wieder in die Schaltstellung "Intervallbetrieb EIN" überführt und ebenfalls eine Wischbewegung willkürlich ausgelöst. Die zwischen den beiden willkürlich ausgelösten Wischbewegungen verstrichene Zeit wird dann als neue Pausenzeit für den weiteren Intervallbetrieb vorgegeben. Wird der Beginn der Programmierung einer neuen Pausenzeit durch das Überführen des Wählschalters in die Schaltstellung "Wischbetrieb AUS" ausgelöst, wenn keine Wischbewegung zeitgleich ausgeführt wird, erfolgt die Erfassung der Pausenzeit durch das anschließende Starten einer Wischbewegung und es wird tatsächlich die gewünschte Pausenzeit erhalten. Wird der Wählschalter jedoch während einer begonnenen Wischbewegung zur Einstellung der Pausenzeit in die Schaltposition "Wischbetrieb AUS" gebracht, entsteht für den Beginn der Messung ein undefinierter Zustand, da die Messung mit Beginn einer neuen Wischbewegung zu erfolgen hat. Es müßte also nach dem Ablauf der begonnen Wischbewegung ein weiterer Wischvorgang gestartet werden, um den tatsächlichen Beginn der Wischbewegung und damit der einzustellenden Pausenzeit zu erfassen. Einerseits ist dies steuerungstechnisch nur mit erheblichem Aufwand realisierbar, andererseits würde das Auslösen einer nochmaligen Wischbewegung nach Beendigung der begonnenen Wischbewegung die Bedienperson bei der Einstellung der Pausenzeit verwirren.

Da ein solcher Zustand mindestens immer dann auftritt, wenn die eingestellte Pausenzeit verlängert werden soll, weil beispielsweise ein Rattern der Wischerblätter während des Wischvorgangs durch Trockenreibung auf der Scheibe auftritt, besteht die Aufgabe der Erfindung darin, das gattungsgemäße Verfahren zur Steuerung des Wischintervalls derart weiterzuentwickeln, daß immer gleichzeitig mit der Überführung des Wählschalters in die Schaltposition "Wischbetrieb AUS" für die Messung der Pausenzeit ein tatsächlicher Beginn der gewünschten Pausenzeit definiert wird.

Die Aufgabe wird mit den Merkmalen des Patentanspruchs 1 gelöst, vorteilhafte Aus- und Weiterbildungen sind in den Unteransprüchen dargestellt.

Erfindungsgemäß wird bei einer Schalterbetätigung des Wählschalters in die Schaltstellung "Wischbetrieb AUS" zur Einstellung einer neuen Pausenzeit das Ende oder der Beginn der letzten während einer Schaltstellung "Intervallbetrieb EIN" des Wählschalters ausgelösten Wischbewegung als Beginn der gewünschten Pausenzeit und der Zeitpunkt der darauffolgenden Schalterbetätigung in die Schaltstellung "Intervallbetrieb EIN" bzw. der Beginn oder das Ende der willkürlich ausgelösten Wischbewegung als Ende der gewünschten Pausenzeit definiert.

Im Gegensatz zu herkömmlichen Verfahren, bei denen der Programmierbeginn der Pausenzeit nur am Ende einer Wischbewegung gestartet werden kann oder bei bestimmten Zeiten der Schalterbetätigungen zur Programmierung einer neuen Pausenzeit, beispielsweise während einer ablaufenden Wischbewegung, kein definierter Anfangspunkt für die Messung festlegbar ist, ist der Zeitpunkt der Schalterbetätigung bei dem erfindungsgemäßen Verfahren unerheblich. Bei einer Betätigung des Wählschalters während einer Pausenzeit zwischen zwei aufeinanderfolgenden Wischbewegungen wird die letzte Wischbewegung, insbesondere das Ende der letzten erfolgten Wischbewegung als Beginn der gewünschten Pausenzeit festgelegt. Erfolgt eine Schalterbetätigung während einer begonnen Wischbewegung kann ggf. auch der Beginn dieser Wischbewegung in Abhängigkeit der Definition der Pausenzeit als Beginn der Messung genutzt werden.

Die Pausenzeit kann gemäß der Erfindung sowohl vom Beginn einer Wischbewegung bis zum Beginn einer darauffolgenden Wischbewegung bzw. vom Ende der Wischbewegung bis zum Ende der darauffolgenden Wischbewegung als auch vom Ende einer Wischbewegung bis zum Beginn der darauffolgenden Wischbewegung festgelegt werden. Letztere hat den Vorteil, das sie gleich ist mit der Zeitspanne, in der der Wischer in Ruhestellung ist. Dies ermöglicht eine einfache digitale Auswertung, wie sie unten beschrieben ist.

Bei einer Schalterbetätigung in die Schaltstellung "Wischbetrieb AUS" während einer begonnen Wischbewegung und einer Verbleibzeit des Wählschalters in der Schaltstellung "Wischbetrieb AUS", die kleiner ist, als die für die begonnene Wischbewegung verbleibende Zeit, stehen gemäß der Erfindung mehrere Möglichkeiten der Programmierung zur Verfügung. So kann in diesem Fall vorgesehen sein, daß keine neue Pausenzeit definiert wird und die abgespeicherte Pausenzeit für den nachfolgenden Wischintervallbetrieb zum Einsatz kommt. Eine andere Möglichkeit besteht darin, die tatsächliche Schalterbetätigungszeit als neue Pausenzeit einzusetzen. Dies hat den Vorteil, daß somit sehr kurze Pausenzeiten eingestellt werden können, wodurch ein Dauerwischbetrieb realisierbar ist und somit auf eine der heute vorgesehenen Geschwindigkeitsstufen des Dauerwischbetriebs verzichtet werden kann. Die bei herkömmlichen Wischermotoren vorgesehene zweite Antriebswicklung ist deshalb entbehrlich und damit der Einsatz preiswerterer Wischermotoren möglich.

Das erfindungsgemäße Verfahren verlangt von dem Fahrer des Fahrzeuges keine zusätzliche Aufmerksamkeit, so daß eine Programmierung der Pausenzeit auch während der Fahrt ohne Ablenkung vom Verkehrsgeschehen erfolgen kann. Vorteilhaft ist hierbei auch, daß durch die Schalterbetätigung in die Schaltstellung "Wischbetrieb AUS" regelmäßig keine Wischbewegung ausgelöst wird, die insbesondere bei einer trockenen Scheibe als störend empfunden wird.

Gemäß einer Weiterbildung der Erfindung wird in Abhängigkeit der Schalterbetätigung ein erstes Steuersignal und in Abhängigheit einer laufenden Wischbewegung ein zweites Steuersignal gebildet. Beide Steuersignale werden zur Ermittlung des Beginns der gewünschten Pausenzeit miteinander verknüpft.

Wird der Wählschalter über eine Zeitdauer, die länger als die maximal einstellbare Pausenzeit ist, in die Schaltstellung "Wischbetrieb AUS" gebracht wird, soll keine neue Pausenzeit ermittelt werden und die gespeicherte Pausenzeit bleibt erhalten.

Beim erstmaligen Überführen des Wählschalters in seine Schaltstellung "Intervallbetrieb EIN", beispielsweise bei Fahrtbeginn oder beim Einsetzen von Regen, beginnt der Wischbetrieb vorzugsweise mit einer vom Hersteller vorgegebenen mittleren Pausenzeit, die dann für den weiteren Fahrtbetrieb solange erhalten bleibt, bis vom Fahrer eine neue Pausenzeit vorgeben wird. Bei einer längeren Unterbrechung des Intervallbetriebes während einer Fahrt ohne daß die Steuerschaltung für den Wischbetrieb stromlos wurde, kann einmal vorgesehen werden, daß der Intervallbetrieb mit der vom Hersteller vorgegebenen mittleren Pausenzeit fortgesetzt wird oder die neu eingestellte Pausenzeit erhalten bleibt.

In heutigen Fahrzeugen sind bereits eine ganze Reihe Steuerschaltungen, beispielsweise für die Fensterheber oder die Zentralveriegelung implementiert, aus diesem Grund ist vorgesehen für die Funktion der Intervallsteuerung keine eigene Steuerschaltung einzusetzen, die Steuerung des Wischintervallrelais wird von einer dieser Steuerschaltungen übernommen.

Nachfolgend wird das erfindungsgemäße Verfahren anhand eines Ausführungsbeispiels näher beschrieben. Die zugehörigen Zeichnungen zeigen:
- Figur 1: einen Zeitverlauf der Schalterbetätigungen und der Wischbewegung bei einem Programmierbeginn während einer Pausenzeit zwischen zwei aufeinanderfolgenden Wischbewegungen,
- Figur 2: einen Zeitverlauf der Schalterbetätigungen und der Wischbewegungen bei einem Programmierbeginn während einer laufenden Wischbewegung und
- Figur 3, 4: jeweils weitere Zeitverläufe bei Schalterbetätigungen.

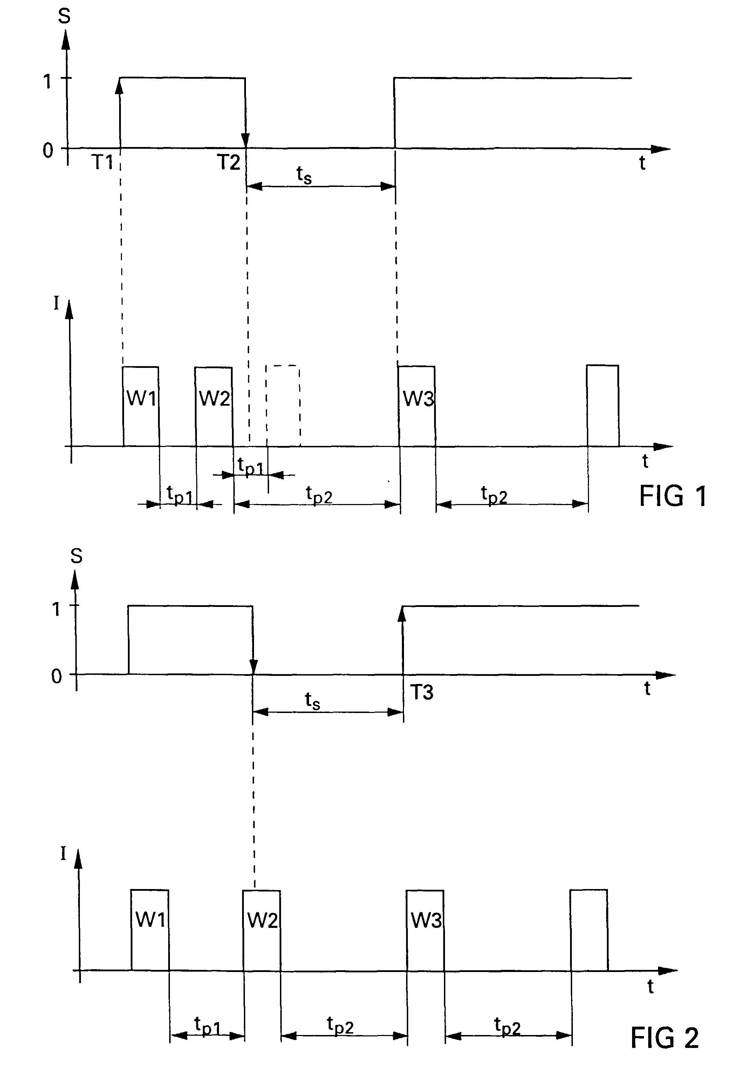

Wie der in Figur 1 gezeigte Zeitverlauf der Schaltstellungen des Wählschalters S verdeutlicht, wird zum Zeitpunkt T1 der Wählschalter erstmalig in die Schaltstellung 1 "Intervallbetrieb EIN" gebracht. Der Scheibenwischer I beginnt mit der vom Hersteller vorgegebenen Pausenzeit tₚ₁ (hier gleichbedeutend mit der Wischerruhezeit) zu wischen. Zum Zeitpunkt T2, der innerhalb der Pausenzeit tₚ₁ liegt , wird der Wählschalter S vom Fahrer in die Schaltposition 0 "Wischbetrieb AUS" überführt. Der normale Intervallbetrieb stoppt und die gestrichelt gezeichnete Wischbewegung wird nicht mehr ausgeführt, jedoch das Ende der Wischbewegung W2 als Beginn der Zeitmessung für eine neue abzuspeichernde Pausenzeit tₚ₂ gesetzt. Während der nun ablaufenden Zeitdauer tₛ, in der sich der Wählschalter S in der Schaltstellung 0 "Wischbetrieb AUS" befindet, beobachtet der Fahrer des Kraftfahrzeuges die Scheibe. Ist dieses so "naß" bzw. "schmutzig", daß eine neue Wischbewegung ausgelöst werden sollte, überführt der Fahrer den Wählschalter S zum Zeitpunkt T3 in die Schaltstellung 1 "Intervallbetrieb EIN" und beendet somit die Zeitmessung der neu eingestellten Pausenzeit tₚ₂. Gleichzeitig wird ein neuer Wischvorgang W3 ausgelöst. Der weitere Intervallbetrieb I wird bis zu einer erneuten Programmierung mit der Pausenzeit tₚ₂ fortgesetzt. Auf die gleiche Weise erfolgt auch eine Verkürzung der Pausenzeit.

Ähnlich verläuft die Programmierung der Pausenzeit des Wischintervallbetriebs auch bei dem in Figur 2 dargestellten Fall. Nur wird hier der Wählschalter S während einer laufenden Wischbewegung W2 in die Schaltstellung 0 "Wischbetrieb AUS" überführt. Nach einer Zeitdauer tₛ, in der sich der Wählschalter S in der Schaltstellung 0 "Wischbetrieb AUS" befindet und nach deren Ablauf der Fahrer eine "nasse" bzw. "schmutzige" Scheibe vorfindet, wird er zur Beendigung der neuen Pausenzeit tₚ₂ den Wählschalter S in die Schaltstellung 1 "Intervallbetrieb EIN" überführen. Es wird ebenfalls gleichzeitig mit der Schalterbetätigung eine Wischbewegung W3 ausgeführt. Die neue Pausenzeit tₚ₂ wird für den nachfolgenden Intervallbetrieb I als Zeitdauer zwischen dem Ende der begonnenen Wischbewegung W2 und dem Zeitpunkt T3, indem der Wählschalter S in die Schaltstellung "Intervallbetrieb EIN" gebracht wurde, festgelegt.

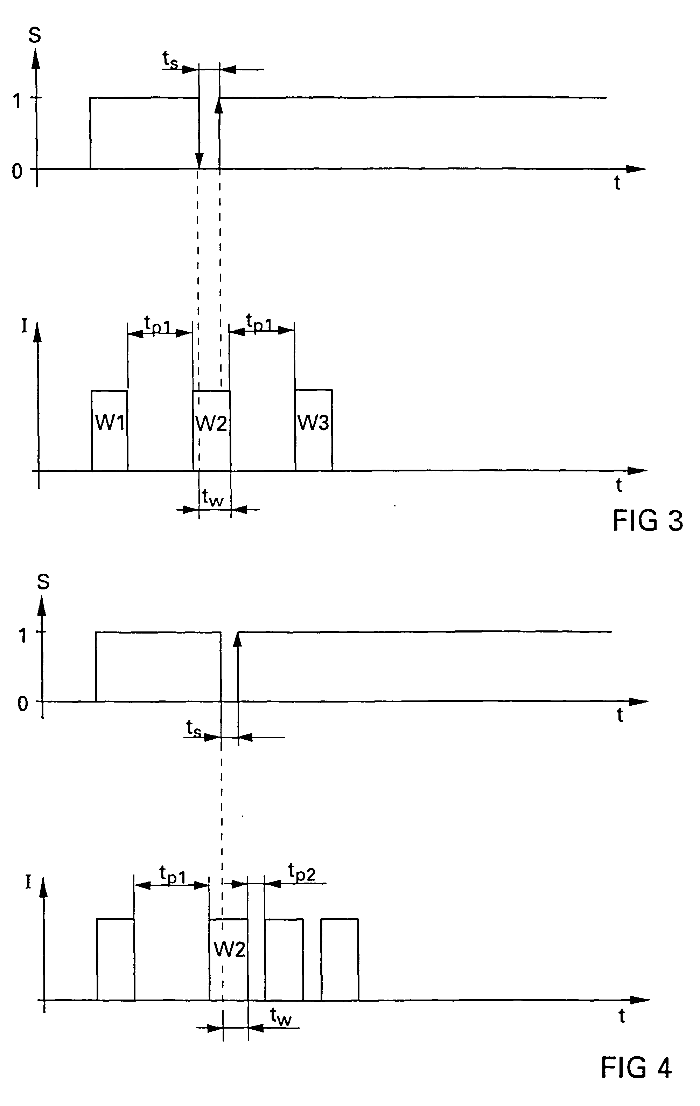

Wenn die Schalterbetätigungszeit tₛ kürzer ist als die verbleibende Zeit t_{w} der begonnenen Wischbewegung W2 bestehen mehrere Möglichkeiten der Programmierung, die anhand der Figur 3 und Figur 4 näher erläutert werden.

Bei der in Figur 3 gezeigten Programmiervariante wird der Wählschalter S während der Wischbewegung W2 in die Schaltstellung "Wischbetrieb AUS" überführt und nach einer Zeitdauer tₛ, die kürzer ist als die nach der Schalterbetätigung für die Wischbewegung W2 verbleibende Zeit t_{w} in die Schaltstellung "Intervallbetrieb EIN" gebracht. Da somit die erneute Schalterbetätigung noch vor Ablauf der Wischbewegung W2 erfolgt, wird keine neue Pausenzeit gespeichert, sondern der Intervallbetrieb I mit der Pausenzeit tₚ₁ fortgesetzt.

In Figur 4 erfolgt die Überführung des Wählschalters S zur Neueinstellung der Pausenzeit ebenfalls während der laufenden Wischbewegung W2, wobei die Schalterbetätigungszeit tₛ nach der der Wählschalter S wieder in die Schaltstellung "Intervallbetrieb EIN" gebracht wird, kleiner ist als die verbleibende Zeit t_{w} der Wischbewegung W2. In diesem Fall wird jedoch die Schalterbetätigungszeit tₛ als neue Pausenzeit tₚ₂ für den weiteren Intervallbetrieb I vorgegeben, wodurch auf einfache Weise annähernd ein Dauerwischbetrieb erzeugt werden kann.

### BEZUGSZEICHENLISTE

- 0: Schalterstellung "Wischbetrieb AUS"
- 1: Schalterstellung "Intervallbetrieb EIN" 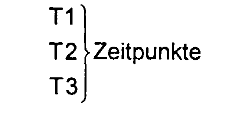
- tₚ₁: Pausenzeit
- tₚ₂: "
- t_{w}: verbleibende Wischintervallzeit
- tₛ: Schalterbetätigungszeit
- S: Wählschalter
- I: Scheibenwischer

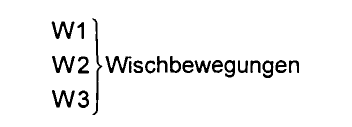

## Patentansprüche

1. Verfahren zur Steuerung des Wischintervalls von Scheibenwischern in Fahrzeugen durch Einstellen der Pausenzeit zwischen zwei aufeinanderfolgenden Wischbewegungen mit Hilfe eines Wählschalters (S) und einer Steuerschaltung, wobei der Wählschalter mindestens eine Schaltstellung "Wischbetrieb AUS" (0) und eine Schaltstellung "Intervallbetrieb EIN" (1) aufweist, und wobei im Intervallbetrieb der Wählschalter (S) sowohl zum Verlängern als auch zum Verkürzen der eingestellten Pausenzeit (tp1) mit einer ersten Schalterbetätigung in die Schaltstellung "Wischbetrieb AUS" (0) und mit einer auf die erste Schalterbetätigung folgenden zweiten Schalterbetätigung in die Schaltstellung "Intervallbetrieb EIN" (1) überführt wird, wobei mit der zweiten Schalterbetätigung eine Wischbewegung (W3) willkürlich ausgelöst wird,
dadurch gekennzeichnet, daß zur Einstellung einer gewünschten Pausenzeit (tp2) bei der ersten Schalterbetätigung in die Schaltstellung "Wischbetrieb AUS" (0) das Ende der letzten während einer Schaltstellung "Intervallbetrieb EIN" (1) des Wählschalters (S) ausgelösten Wischbewegung (W2) als Beginn der gewünschten Pausenzeit (tp2) und der Zeitpunkt (T3) der zweiten Schalterbetätigung, oder die hierdurch willkürlich ausgelöste Wischbewegung (W3), als Ende der gewünschten Pausenzeit definiert wird.

2. Verfahren nach Anspruch 1, dadurch gekennzeichnet, daß bei einer ersten Schalterbetätigung während einer begonnenen Wischbewegung (W2) und einer Verbleibzeit (tₛ) des Wählschalter (S) in der Schaltstellung "Wischbetrieb AUS" (0), die kleiner ist als die für die begonnene Wischbewegung verbleibende Zeit (t_{w}), keine neue Pausenzeit definiert wird und die eingestellte Pausenzeit (tₚ₁) erhalten bleibt.

3. Verfahren nach Anspruch 1, dadurch gekennzeichnet, daß bei einer ersten Schalterbetätigung während einer begonnenen Wischbewegung (W2) und einer Verbleibzeit (tₛ) des Wählschalters (S) in der Schaltstellung "Wischbetrieb AUS" (0), die kleiner ist als die für die begonnene Wischbewegung verbleibende Zeit (t_{w}), die Verbleibzeit des Wählschalters in der Schaltstellung "Wischbetrieb AUS" (0) als neue Pausenzeit (tₚ₂) definiert wird.

4. Verfahren nach einem der Ansprüche 1 bis 3, dadurch gekennzeichnet, daß in Abhängigkeit der Schalterbetätigung ein erstes Steuersignal und in Abhängigkeit einer laufenden Wischbewegung ein zweites Steuersignal gebildet wird, die zur Ermittlung der gewünschten Pausenzeit (tₚ₂) miteinander verknüpft werden.

5. Verfahren nach Anspruch 4, dadurch gekennzeichnet, daß das erste Steuersignal nur über eine Zeitdauer, die der maximal einstellbaren Pausenzeit (tₚ₂) entspricht, gebildet wird.

6. Verfahren nach einem der Ansprüche 1 bis 5, dadurch gekennzeichnet, daß der eingestellte Wert der Pausenzeit (tₚ₂) bei einer Unterbrechung des normalen Intervallbetrieb (I) erhalten bleibt.

7. Verfahren nach einem der Ansprüche 1 bis 6, dadurch gekennzeichnet, daß der Wischintervallbetrieb (I) beim erstmaligen Überführen des Wählschalter (S) in seine Schaltstellung "Intervallbetrieb EIN" (1) mit einer vorgegebenen Pausenzeit (tₚ₁) beginnt.

8. Verfahren nach einem der Ansprüche 1 bis 7, dadurch gekennzeichnet, daß die Steuerschaltung weitere Steuerfunktionen im Kraftfahrzeug übernimmt.

9. Verfahren nach einem der Ansprüche 1 bis 8, dadurch gekennzeichnet, daß durch die erste Schalterbetätigung keine Wischbewegung ausgelöst wird.

## Claims

1. Method of controlling the wipe interval of motor vehicle windscreen wipers by adjusting the pause time between two successive wipe movements with the aid of a selector switch (S) and a control circuit, wherein the selector switch comprises at least one switch position "wipe operation OFF" (0) and a switch position "interval operation ON" (1), and wherein during the interval operation the selector switch (S) is moved both to extend and also to shorten the set pause time (tp1) with a first switch actuation into the switch position "wipe operation OFF" (0) and with a second switch actuation following the first switch actuation into the switch position "interval operation ON" (1), a wipe movement (W3) being triggered arbitrarily with the second switch actuation,
characterised in that in order to adjust the pause time (tp2) to a desired value during the first switch actuation into the switch position "wipe operation OFF" (0), the end of the wipe movement (W2) last triggered during a switch position "interval operation ON" (1) of the selector switch (S) is defined as the commencement of the desired pause time (tp2) and the point in time (T3) of the second switch actuation or the wipe movement (W3) triggered arbitrarily by said second switch actuation is defined as the end of the desired pause time.

2. Method according to claim 1, characterised in that in the case of a first switch actuation during a commenced wipe movement (W2) and of a dwell period (tₛ) of the selector switch (S) in the switch position "wipe operation OFF" (0) which is smaller than the period of time (t_{w}) remaining for the commenced wipe movement, no new pause time is defined and the set pause time (tₚ₁) is retained.

3. Method according to claim 1, characterised in that in the case of a first switch actuation during a commenced wipe movement (W2) and of a dwell period (tₛ) of the selector switch (S) in the switch position "wipe operation OFF" (0) which is smaller than the period of time (t_{w}) remaining for the commenced wipe movement, the dwell period of the selector switch in the switch position "wipe operation OFF" (0) is defined as the new pause time (tₚ₂).

4. Method according to any one of claims 1 to 3, characterised in that a first control signal is formed in dependence upon the switch actuation and a second control signal is formed in dependence upon a current wipe movement and the two control signals are linked to each other to determine the desired pause time (tₚ₂).

5. Method according to claim 4, characterised in that the first control signal is formed only for a period of time which corresponds to the maximum adjustable pause time (tₚ₂).

6. Method according to any one of claims 1 to 5, characterised in that the set value of the pause time (tₚ₂) is retained in the event of the normal interval operation (1) being interrupted.

7. Method according to any one of claims 1 to 6, characterised in that the wipe interval operation (1) commences with a predetermined pause time (tₚ₁) as the selector switch (S) moves for the first time into its switch position "interval operation ON".

8. Method according to any one of claims 1 to 7, characterised in that the control circuit assumes further control functions in the motor vehicle.

9. Method according to any one of claims 1 to 8, characterised in that the first switch actuation does not trigger a wipe movement.

## Revendications

1. Procédé servant à commander l'intervalle d'essuyage de balais d'essuie-glaces dans des véhicules en réglant le temps de pause entre deux mouvements d'essuyage consécutifs à l'aide d'un sélecteur (S) et d'un circuit de commande, le sélecteur présentant au moins une position de commande "ARRET Essuyage" (0) et une position de commande "MARCHE par intermittence" (1), et en faisant passer lors du fonctionnement par intermittence le sélecteur (S) aussi bien pour prolonger que pour raccourcir le temps de pause réglé (tₚ₁) par un premier actionnement du sélecteur dans la position de commande "ARRET Essuyage" (0) et par un deuxième actionnement du sélecteur qui suit le premier actionnement du sélecteur dans la position "MARCHE par intermittence" (1), un mouvement d'essuyage (W3) étant volontairement déclenché par le deuxième actionnement du sélecteur,
caractérisé en ce que pour régler un temps de pause voulu (tₚ₂) lors du premier actionnement du sélecteur dans la position de commande "ARRET Essuyage" (O) on définit la fin du dernier mouvement d'essuyage (W2) déclenché pendant une position de commande "MARCHE par intermittence" (1) du sélecteur (S) comme étant le début du temps de pause voulu (tₚ₂) et l'instant (T3) du second actionnement du sélecteur, ou le mouvement d'essuyage (W3), ainsi déclenché volontairement, comme étant la fin du temps de pause voulu.

2. Procédé selon la revendication 1, caractérisé en ce que dans le cas d'un premier actionnement du sélecteur pendant un mouvement d'essuyage entamé (W2) et un temps qui subsiste (tₛ) du sélecteur (S) dans la position de commande "ARRET Essuyage" (0), qui est plus petit que le temps (t_{w}) qui subsiste pour le mouvement d'essuyage entamé, on ne définit pas de nouveau temps de pause et le temps de pause (tₚ₁) réglé est conservé.

3. Procédé selon la revendication 1, caractérisé en ce que dans le cas d'un premier actionnement du sélecteur pendant un mouvement d'essuyage entamé (W2) et un temps qui subsiste (tₛ) du sélecteur (S) dans la position de commande "ARRET Essuyage" (0), qui est plus petit que le temps (t_{w}) qui subsiste pour le mouvement d'essuyage entamé, le temps qui subsiste pour le sélecteur (S) dans la position de commande "ARRET Essuyage" (0) est défini comme le nouveau temps de pause (tₚ₂).

4. Procédé selon l'une des revendications 1 à 3, caractérisé en ce qu'en fonction de l'actionnement du sélecteur, on forme un premier signal de commande et en fonction d'un mouvement d'essuyage en cours, on forme un deuxième signal de commande, qui sont combinés l'un avec l'autre pour déterminer le temps de pause (tₚ₂) voulu.

5. Procédé selon la revendication 4, caractérisé en ce que le premier signal de commande n'est formé que sur une durée, qui correspond au temps de pause (tₚ₂), que l'on peut régler au maximum.

6. Procédé selon l'une des revendications 1 à 5, caractérisé en ce que la valeur réglée du temps de pause (tₚ₂) est maintenue lors d'une interruption du fonctionnement normal par intermittence (I).

7. Procédé selon l'une des revendications 1 à 6, caractérisé en ce que le fonctionnement de l'essuie-glaces par intermittence (I) commence lors du premier passage du sélecteur (S) dans sa position de commande "MARCHE par intermittence" (1) avec un temps de pause (tₚ₁) prédéfini.

8. Procédé selon l'une des revendications 1 à 7, caractérisé en ce que le circuit de commande assume d'autres fonctions de commande dans le véhicule.

9. Procédé selon l'une des revendications 1 à 8, caractérisé en ce qu'aucun mouvement d'essuyage n'est déclenché par le premier actionnement du sélecteur.
